# FASCICULE DE BREVET EUROPEEN

(11) **EP 4 535 564 B1**
(45) Date de publication et mention de la délivrance du brevet: **14.01.2026**
(21) Numéro de dépôt: 24204432.9
(22) Date de dépôt: 03.10.2024
(51) Int. Cl.: H01Q 3/46

(54) **ANTENNE RECONFIGURABLE**
REKONFIGURIERBARE ANTENNE
RECONFIGURABLE ANTENNA

(30) Priorité: 05.10.2023 FR 2310684
(43) Date de publication de la demande: 09.04.2025
(73) Titulaire: Commissariat à l'Energie Atomique et aux Energies Alternatives, 75015 Paris (FR)
(72) Inventeur: CLEMENTE, Antonio, 38054 GRENOBLE CEDEX 09 (FR); GONZALEZ JIMENEZ, José Luis, 38054 GRENOBLE CEDEX 09 (FR)
(74) Mandataire: Cabinet Beaumont

(56) Documents cités:
- EP-A2- 1 041 673
- PAN WENBO ET AL: "An Amplifying Tunable Transmitarray Element", IEEE ANTENNAS AND WIRELESS PROPAGATION LETTERS, vol. 13, 2014 - 2014, pages 702 - 705, XP011545949, ISSN: 1536-1225, [retrieved on 20140418], DOI: 10.1109/LAWP.2014.2313596
- LANDSBERG NAFTALI ET AL: "Design and Measurements of 100 GHz Reflectarray and Transmitarray Active Antenna Cells", IEEE TRANSACTIONS ON ANTENNAS AND PROPAGATION, IEEE, USA, vol. 65, no. 12, 1 December 2017 (2017-12-01) - 1 December 2017 (2017-12-01), pages 6986 - 6997, XP011673503, ISSN: 0018-926X, [retrieved on 20171128], DOI: 10.1109/TAP.2017.2759840

## Description

### Domaine technique

La présente description concerne de façon générale les dispositifs électroniques, plus particulièrement les antennes reconfigurables.

### Technique antérieure

Par rapport aux antennes traditionnelles, les antennes reconfigurables peuvent présenter un gain amélioré et donnent accès à des fonctionnalités supplémentaires, par exemple de dépointage électronique ou d'émission de faisceaux multiples, pincés ou formés. Cela profite au développement de nombreuses applications, telles que des systèmes radar, des systèmes de détection et des systèmes de communication depuis la bande C (de 4 à 8 GHz environ) jusqu'à la bande D (de 110 à 170 GHz environ). L'utilisation d'antennes reconfigurables est par ailleurs envisagée dans une bande de fréquences située autour de 300 GHz.

De multiples champs d'application sont susceptibles de tirer profit d'antennes reconfigurables, parmi lesquels :
- des radars automobiles d'assistance et/ou d'aide à la conduite, par exemple à des fins de sécurité active ;
- des systèmes d'imagerie et de surveillance à très haute résolution ;
- des systèmes de communication à très haut débit par ondes millimétriques, par exemple pour des communications inter ou intra-bâtiment en environnement domotique ou immotique ;
- des antennes pour des applications spatiales, par exemple des liaisons de télémesure sol-satellite LEO (de l'anglais « Low Earth Orbit » - orbite terrestre basse) en bande Ka, des antennes à réflecteur dédiées à des communications par satellite avec source primaire reconfigurable, des systèmes de télécommunication par satellite en mouvement (« Satellite On The Move » - SOTM, en anglais), des dispositifs ou systèmes d'accès à Internet, des dispositifs ou systèmes de diffusion télévisuelle, etc. ; et
- des systèmes de communication point-à-point et point-à-multipoint tels que des réseaux métropolitains, des systèmes « fronthaul » et « backhaul » pour des réseaux cellulaires, des accès radio pour des réseaux mobiles 5G, etc.

Parmi les antennes à gain élevé existantes, des antennes à réflecteur ont en particulier été proposées. Ces antennes sont toutefois complexes et onéreuses à réaliser car les réflecteurs requièrent, notamment pour des applications à haute fréquence, une courbure très précise. De plus, des moteurs sont utilisés pour diriger le faisceau dans la direction souhaitée. Des antennes à réseau phasé ont été proposées pour permettre un contrôle électronique du faisceau. Toutefois, ces antennes s'avèrent coûteuses à développer et à produire, en particulier du fait qu'elles comprennent des modules d'amplification visant à compenser des pertes induites par des circuits de déphasage.

D'autres antennes reconfigurables à dépointage et/ou à formation de faisceau ont par ailleurs été proposées. Parmi ces antennes, il existe en particulier des antennes à réseau transmetteur (« transmitarray antenna », en anglais), aussi appelées antennes lentilles discrètes. Les antennes à réseau transmetteur existantes comprennent généralement un panneau rayonnant comportant des cellules élémentaires, ou cellules transmettrices, reconfigurables. Chaque cellule élémentaire du panneau rayonnant comprend un premier élément d'antenne irradié par un champ électromagnétique émis par une ou plusieurs sources focales, un deuxième élément d'antenne transmettant un signal modifié vers l'extérieur de l'antenne, et un élément de couplage entre les premier et deuxième éléments d'antenne. Les cellules élémentaires sont destinées à contrôler une distribution de champ électromagnétique au voisinage d'une ouverture rayonnante de l'antenne, permettant ainsi de produire un ou plusieurs faisceaux dans une direction donnée ou de synthétiser un faisceau avec un gabarit défini. Dans un cas idéal, chaque cellule élémentaire est capable de compenser chaque différence de trajet entre la ou les sources focales et l'ouverture rayonnante. En pratique, dans un souci de simplification de l'antenne, les cellules élémentaires ne peuvent compenser qu'un nombre limité d'états de phase, par exemple 2^{N} états de phase, avec N un entier positif, dans un cas d'une compensation à quantification de phase à N bits. Un même réseau transmetteur peut alterner entre des phases d'émission et de réception, à condition d'être dépourvu d'éléments non réciproques tels que des amplificateurs ou des atténuateurs. Dans le cas contraire, le réseau transmetteur ne peut fonctionner qu'en émission ou qu'en réception. Le document de PAN WENBO ET AL: "An Amplifying Tunable Transmitarray Element",IEEE ANTENNAS AND WIRELESS PROPAGATION LETTERS, vol. 13 , pages 702-705,ISSN: 1536-1225, DOI: 10.1109/LAWP.2014.2313596 divulgue une antenne comprenant un réseau configurable amplificateur.

Les antennes à réseau transmetteur souffrent toutefois de divers inconvénients. En particulier, les antennes à réseau transmetteur existantes présentent une épaisseur relativement importante, imposée par un besoin d'éloignement de la ou des sources focales par rapport au réseau transmetteur.

### Résumé de l'invention

Il serait souhaitable de pallier tout ou partie des inconvénients des antennes reconfigurables existantes. Il existe plus particulièrement un besoin de disposer d'antennes reconfigurables présentant des performances améliorées, une consommation énergétique réduite et un encombrement moindre par rapport aux antennes reconfigurables existantes, afin par exemple de répondre aux besoins d'applications telles que les satellites de communication (SATCOM).

Pour cela, un mode de réalisation prévoit une antenne reconfigurable selon la revendication 1.

Les revendications dépendantes constituent des modes particuliers de réalisation facultatifs et complémentaires à la revendication indépendante.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue de côté, schématique et partielle, d'un exemple d'antenne à réseau transmetteur ;
la figure 2 est une vue de côté, schématique et partielle, d'une antenne reconfigurable selon un mode de réalisation ; et
la figure 3 est une vue de détail d'une partie de l'antenne de la figure 2.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les procédés de fabrication des réseaux transmetteurs décrits ne seront pas détaillés, la réalisation des structures décrites étant à la portée de la personne du métier à partir des indications de la présente description, par exemple en mettant en œuvre des techniques usuelles de fabrication de circuits imprimés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais « coupled ») entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire, à l'orientation des figures.

Sauf précision contraire, les expressions « environ », « approximativement », « sensiblement », et « de l'ordre de » signifient à 10 % près, de préférence à 5 % près.

Dans la description qui suit, les qualificatifs « isolant » et « conducteur » signifient respectivement, sauf précision contraire, électriquement isolant et électriquement conducteur.

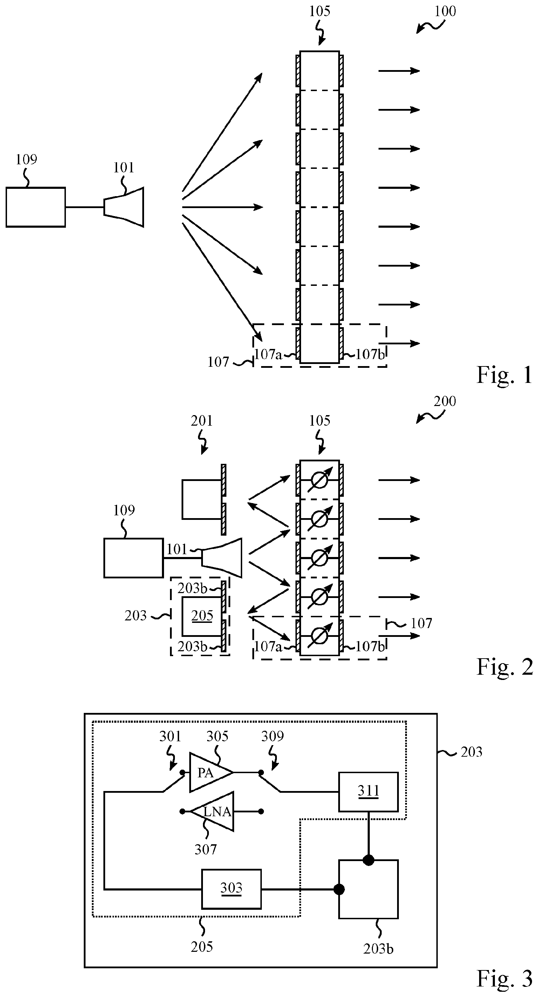

La figure 1 est une vue de côté, schématique et partielle, d'un exemple d'antenne 100 à réseau transmetteur (« transmitarray antenna », en anglais).

L'antenne 100 comprend typiquement une ou plusieurs sources primaires 101 (une unique source 101, dans l'exemple représenté) irradiant un réseau transmetteur 105. La source 101 peut présenter une polarisation quelconque, par exemple linéaire ou circulaire. Le réseau 105 comprend une pluralité de cellules élémentaires 107, par exemple disposées en matrice selon des lignes et des colonnes. Chaque cellule 107 comprend typiquement un premier élément d'antenne 107a, situé du côté d'une première face du réseau 105 disposée en regard de la source primaire 101, et un deuxième élément d'antenne 107b, situé du côté d'une deuxième face du réseau opposée à la première face. La deuxième face du réseau 105 est par exemple tournée vers un milieu d'émission, ou milieu extérieur, de l'antenne 100.

Chaque cellule 107 est apte, en émission, à recevoir un rayonnement électromagnétique sur son premier élément d'antenne 107a et à réémettre ce rayonnement depuis son deuxième élément d'antenne 107b, par exemple en introduisant un déphasage ϕ connu. En réception, chaque cellule 107 est apte à recevoir un rayonnement électromagnétique sur son deuxième élément d'antenne 107b et à réémettre ce rayonnement depuis son premier élément d'antenne 107a, en direction de la source 101, avec le même déphasage ϕ. Le rayonnement réémis par le premier élément d'antenne 107a est par exemple focalisé sur la source 101.

Les caractéristiques du rayonnement en champ proche ou lointain produit par l'antenne 100, notamment sa forme (ou gabarit), son intensité et sa direction d'émission maximale (ou direction de pointage), dépendent des valeurs des déphasages respectivement introduits par les différentes cellules 107 du réseau 105.

Les antennes à réseau transmetteur ont pour avantages, entre autres, de présenter une bonne efficacité énergétique et d'être relativement simples, peu onéreuses et peu encombrantes. Cela provient notamment du fait que les réseaux transmetteurs sont réalisables en technologie planaire, généralement sur circuit imprimé.

La présente description vise plus particulièrement les antennes à réseau transmetteur 105 reconfigurable et à faisceau fixe. Le réseau transmetteur 105 est dit reconfigurable lorsque les cellules élémentaires 107 sont commandables électroniquement de façon individuelle pour modifier leur valeur de déphasage ϕ et/ou leur amplitude, ce qui permet de modifier dynamiquement les caractéristiques du rayonnement généré par l'antenne, et notamment de modifier sa direction de pointage sans déplacer mécaniquement l'antenne ou une partie de l'antenne au moyen d'un élément motorisé.

Dans l'exemple illustré, la source primaire 101 est connectée à un circuit 109. Le circuit 109 est par exemple un circuit d'émission et/ou de réception destiné respectivement à produire des signaux à émettre par l'antenne reconfigurable 100 et/ou à traiter des signaux reçus par l'antenne reconfigurable 100. Cet exemple n'est toutefois pas limitatif, le circuit 109 pouvant en outre mettre en œuvre des fonctions additionnelles telles que des fonctions de conversion analogique-numérique, de filtrage, d'adaptation d'impédance, d'élimination d'interférences, etc.

La figure 2 est une vue de côté, schématique et partielle, d'une antenne reconfigurable 200 selon un mode de réalisation. L'antenne 200 de la figure 2 comprend des éléments communs avec l'antenne 100 de la figure 1. Ces éléments communs ne seront pas détaillés à nouveau ci-après.

L'antenne reconfigurable 200 de la figure 2 diffère de l'antenne reconfigurable 100 de la figure 1 en ce que l'antenne reconfigurable 200 comprend en outre un réseau amplificateur 201 comprenant une pluralité de cellules élémentaires 203. Le réseau amplificateur 201 est, de préférence, positionné dans une région de champ proche du réseau transmetteur 105.

Selon un mode de réalisation, la source 101 est configurée pour irradier, ou pour être irradiée par, le réseau transmetteur 105, et le réseau amplificateur 201 est configuré pour irradier et pour être irradié par le réseau transmetteur 105.

Les cellules élémentaires 203 du réseau amplificateur 201 sont par exemple disposées en matrice selon des lignes et des colonnes. Par ailleurs, les cellules élémentaires 203 sont par exemple sensiblement situées dans un même plan, le réseau 201 étant dans ce cas de type planaire. Chaque cellule élémentaire 203 comprend au moins un élément d'antenne 203b (deux éléments d'antenne 203b, dans l'exemple représenté) situé du côté d'une face du réseau amplificateur 201 disposée en regard du réseau transmetteur 105. Chaque cellule élémentaire 203 comprend en outre un circuit d'amplification 205 (symbolisé, en figure 2, par un carré) connecté à l'élément ou aux éléments d'antenne 203b de la cellule. À titre d'exemple, le réseau amplificateur 201 est réalisé en technologie planaire, par exemple sur une carte de circuit imprimé.

Le réseau amplificateur 201 de l'antenne reconfigurable 200 comprend par exemple un nombre d'éléments d'antenne 203b égal au nombre de premiers éléments d'antenne 107a du réseau transmetteur 105, chaque élément d'antenne 203b du réseau amplificateur 201 étant par exemple situé en vis-à-vis de l'un des premiers éléments d'antenne 107a du réseau transmetteur 105. Toutefois, cet exemple n'est pas limitatif et le réseau amplificateur 201 peut, à titre de variante, comprendre un nombre d'éléments d'antenne 203b strictement inférieur ou strictement supérieur au nombre de premiers éléments d'antenne 107a du réseau transmetteur 105.

Les cellules élémentaires 107 du réseau transmetteur 105 sont par exemple sensiblement situées dans un même plan, par exemple un plan sensiblement parallèle au plan du réseau amplificateur 201. Chaque cellule élémentaire 107 du réseau transmetteur 105 est par exemple séparée des cellules élémentaires 107 adjacentes par une distance égale à environ une demi-longueur d'onde centrale d'émission et/ou de réception de l'antenne 200.

Dans l'exemple représenté, l'antenne reconfigurable 200 comprend un nombre de cellules élémentaires 203 strictement inférieur au nombre de cellules élémentaires 107. Cet exemple n'est toutefois pas limitatif, l'antenne reconfigurable 200 pouvant, à titre de variante, comporter un nombre de cellules élémentaires 203 égal ou strictement supérieur au nombre de cellules élémentaires 107. À titre d'exemple, l'antenne reconfigurable 200 comprend quatre, neuf ou seize fois moins de circuits d'amplification 205 que de cellules élémentaires 107, chaque cellule élémentaire 203 comprenant alors par exemple respectivement quatre, neuf ou seize éléments d'antenne 203b.

Bien que seules deux cellules élémentaires 203 et cinq cellules élémentaires 107 aient été représentées en figure 2, l'antenne reconfigurable 200 peut bien entendu comprendre des nombres de cellules élémentaires 203 et de cellules élémentaires 107 différents de ceux représentés, par exemple plusieurs dizaines, plusieurs centaines ou plusieurs milliers de cellules élémentaires 203 et de cellules élémentaires 105.

La figure 2 illustre plus particulièrement un cas dans lequel l'antenne reconfigurable 200 fonctionne en émission. Dans ce cas, la source 101 irradie le réseau transmetteur 105 dont chaque cellule 107 est apte à recevoir un rayonnement électromagnétique provenant de la source 101 sur son premier élément d'antenne 107a, et à réémettre ce rayonnement depuis son premier élément d'antenne 107a en direction du réseau amplificateur 201. En émission, le premier élément d'antenne 107a permet de réfléchir le rayonnement électromagnétique provenant de la source 101 en direction des cellules élémentaires 203 du réseau amplificateur 201. Les premiers éléments d'antenne 107a des cellules élémentaires 107 présentent par exemple, à cette fin, une polarisation sensiblement orthogonale à la polarisation de la source 101. À titre d'exemple, les deuxièmes éléments d'antenne 107b des cellules élémentaires 107 présentent une polarisation linéaire parallèle ou orthogonale à la polarisation des premières cellules élémentaires 107a. À titre de variante, les deuxièmes éléments d'antenne 107b des cellules élémentaires 107 présentent une polarisation circulaire.

En émission, chaque cellule élémentaire 203 du réseau amplificateur 201 est apte à recevoir, sur son élément d'antenne 203b ou l'un de ses éléments d'antenne 203b, un rayonnement électromagnétique provenant de la réflexion, sur les premiers éléments d'antenne 107a des cellules élémentaires 107 du réseau transmetteur 105, et à émettre, depuis son élément d'antenne 203b ou un autre de ses éléments d'antenne 203b, un rayonnement électromagnétique amplifié et de polarisation modifiée en direction du réseau transmetteur 105. Les cellules élémentaires 203 sont par exemple adaptées à opérer une rotation de polarisation, par exemple de l'ordre de 90°, entre le rayonnement reçu et le rayonnement réémis. Dans ce cas, le rayonnement électromagnétique réémis par les cellules élémentaires 203 du réseau amplificateur 201 présente par exemple une polarisation sensiblement parallèle à celle des premiers éléments d'antenne 107a des cellules élémentaires 107 du réseau transmetteur 105. Chaque cellule 107 est apte, en émission, à recevoir, sur son premier élément d'antenne 107a, un rayonnement électromagnétique provenant du réseau amplificateur 201 et à réémettre ce rayonnement, depuis son deuxième élément d'antenne 107b, par exemple en introduisant un déphasage ϕ connu.

Les caractéristiques du rayonnement en champ proche ou lointain produit par l'antenne 200, notamment sa forme (ou gabarit), son intensité et sa direction d'émission maximale (ou direction de pointage), dépendent des valeurs des déphasages respectivement introduits par les différentes cellules élémentaires 107 du réseau transmetteur 105.

Bien que cela n'ait pas été représenté, l'antenne reconfigurable 200 peut, à titre de variante, fonctionner en réception. Dans ce cas, chaque cellule élémentaire 107 du réseau transmetteur 105 est apte à recevoir, sur son deuxième élément d'antenne 107b, un rayonnement électromagnétique provenant du milieu extérieur et à réémettre ce rayonnement, depuis son premier élément d'antenne 107a, en direction des cellules élémentaires 203 du réseau amplificateur 201, avec le déphasage ϕ. En réception, chaque cellule élémentaire 203 du réseau amplificateur 201 est apte à recevoir, sur son élément d'antenne 203b ou l'un de ses éléments d'antenne 203b, un rayonnement électromagnétique provenant du réseau transmetteur 105 et à émettre, depuis son élément d'antenne 203b ou un autre de ses éléments d'antenne 203b, un rayonnement électromagnétique amplifié et de polarisation modifiée en direction du réseau transmetteur 105. Le rayonnement électromagnétique réémis par les cellules élémentaires 203 du réseau amplificateur 201 présente par exemple une polarisation sensiblement orthogonale à celle des premiers éléments d'antenne 107a des cellules élémentaires 107 du réseau transmetteur 105. Dans ce cas, chaque cellule 107 est apte à recevoir un rayonnement électromagnétique provenant du réseau amplificateur 201 sur son premier élément d'antenne 107a, et à réémettre ce rayonnement depuis son premier élément d'antenne 107a. En réception, le premier élément d'antenne 107a permet par exemple de réfléchir le rayonnement électromagnétique provenant du réseau amplificateur 201 en direction de la source 101.

Chaque cellule élémentaire 107 comprend par exemple un circuit de déphasage dont une première borne est connectée au premier élément d'antenne 107a, situé en regard de la source 101 et vers le réseau amplificateur 201, et dont une deuxième borne est connectée au deuxième élément d'antenne 107b, tourné vers le milieu extérieur. Le circuit de déphasage est par exemple configuré pour appliquer un déphasage ϕ entre le signal reçu par l'élément d'antenne 107a et le signal émis par l'élément d'antenne 107b, dans le cas où l'antenne reconfigurable 200 fonctionne en émission, ou pour appliquer le déphasage ϕ entre le signal reçu par l'élément d'antenne 107b et le signal émis par l'élément d'antenne 107a, dans le cas où l'antenne reconfigurable 200 fonctionne en réception.

La figure 2 illustre un exemple dans lequel chaque cellule élémentaire 107 est configurée pour introduire un déphasage ϕ entre les signaux reçus ou émis par l'élément d'antenne 107a et les signaux émis ou reçus par l'élément d'antenne 107b. Cet exemple n'est toutefois pas limitatif, la cellule élémentaire pouvant, à titre de variante ou à titre complémentaire, mettre en œuvre d'autres fonctions, par exemple une fonction de changement d'état de polarisation permettant de passer d'un signal présentant une polarisation circulaire gauche à un signal présentant une polarisation circulaire droite. À titre d'exemple, chaque cellule élémentaire 107 du réseau transmetteur reconfigurable 105 présente une structure identique ou analogue à la cellule élémentaire de réseau transmetteur décrite dans la demande de brevet EP 4117117, la cellule étant alors par exemple adaptée à commuter entre deux états de polarisation et quatre états de phase.

La figure 3 est une vue de détail d'une partie de l'antenne reconfigurable 200 de la figure 2. La figure 3 est plus précisément un schéma électrique équivalent de l'une des cellules élémentaires 203 du réseau amplificateur 201.

Dans l'exemple représenté, la cellule élémentaire 203 comprend un commutateur 301, par exemple un commutateur unipolaire à double effet (« Single Pole Double Throw » - SPDT, en anglais). Dans cet exemple, le commutateur 301 comprend plus précisément une entrée connectée à un circuit 303, une première sortie connectée à une entrée d'un premier amplificateur 305 (PA), et une deuxième sortie connectée à une sortie d'un deuxième amplificateur 307 (LNA). Le commutateur 301 reçoit par exemple un signal de commande pour connecter son entrée à sa première sortie, lorsque l'antenne reconfigurable 200 est utilisée en émission, et à sa deuxième sortie, lorsque l'antenne reconfigurable 200 est utilisée en réception.

L'amplificateur 305 de la cellule élémentaire 203 est par exemple destiné à amplifier un signal émis par l'antenne 200. À titre d'exemple, l'amplificateur 305 est un amplificateur de puissance, par exemple un amplificateur linéaire de classe A en technologie CMOS (de l'anglais « Complementary Metal-Oxide-Semiconductor » - métal oxyde semiconducteur complémentaire) SOI (de l'anglais « Silicon On Insulator » - silicium sur isolant), par exemple du type décrit dans l'article de A. Hamani, A. Siligaris, B. Blampey et J. L. G. Jimenez intitulé « 167-GHz and 155-GHz High Gain D-band Power Amplifiers in CMOS SOI 45-nm Technology » issu de la quinzième conférence « European Microwave Integrated Circuits Conference (EuMIC) » à Utrecht, Pays-Bas de 2021, pages 261 à 264.

L'amplificateur 307 de la cellule élémentaire 203 est par exemple destiné à amplifier un signal reçu par l'antenne 200. À titre d'exemple, l'amplificateur 307 est un amplificateur faible bruit (« Low Noise Amplifier » - LNA, en anglais). Cela permet d'optimiser un facteur de bruit de la cellule élémentaire 203 lorsqu'elle est utilisée en réception. À titre d'exemple, l'amplificateur 307 comprend un amplificateur de classe « AB » comportant par exemple un ou deux étages de fonctionnement. L'amplificateur 307 présente par exemple une puissance électrique comprise entre 10 et 20 mW.

Dans l'exemple représenté, la cellule élémentaire 203 comprend un autre commutateur 309, par exemple un commutateur unipolaire à double effet (« Single Pole Double Throw » - SPDT, en anglais). Dans cet exemple, le commutateur 309 comprend plus précisément une entrée connectée à un circuit 311, une première sortie connectée à une sortie du premier amplificateur 305, et une deuxième sortie connectée à une entrée du deuxième amplificateur 307. Le commutateur 309 reçoit par exemple un signal de commande pour connecter son entrée à sa première sortie, lorsque l'antenne reconfigurable 200 est utilisée en émission, et à sa deuxième sortie, lorsque l'antenne reconfigurable 200 est utilisée en réception.

À titre d'exemple, les circuits 303 et 311 sont des circuits d'adaptation d'impédance et/ou de découplage entre des signaux radiofréquence et des signaux basse fréquence, par exemple des signaux continus.

Dans l'exemple représenté, les circuits 303 et 311 comprennent chacun une borne connectée à l'élément d'antenne 203b. Les circuits 303 et 311 sont par exemple connectés à des régions différentes de l'élément d'antenne 203b. À titre d'exemple, l'élément d'antenne 203b est une antenne à plaque (« patch antenna », en anglais) comprenant par exemple un plan conducteur de forme rectangulaire ou carrée dans lequel est formée une fente en forme de U.

La figure 3 illustre un exemple dans lequel la cellule élémentaire 203 comprend les commutateurs 301 et 309 permettant d'activer soit l'amplificateur 305, lors de phases d'émission, soit l'amplificateur 307, lors de phases de réception. Cet exemple n'est toutefois pas limitatif, chaque cellule élémentaire 203 du réseau 201 pouvant, à titre de variante, être dépourvue des commutateurs 301 et 309 et ne comporter qu'un seul amplificateur, par exemple l'amplificateur 305 dans un cas où l'antenne 200 est utilisée exclusivement en émission, ou l'amplificateur 307, dans un cas où l'antenne 200 est utilisée exclusivement en réception.

Un avantage de l'antenne reconfigurable 200 tient au fait que la présence du réseau amplificateur 201 permet avantageusement de rapprocher la source primaire 101 par rapport au réseau transmetteur 105. Dit autrement, cela permet de « replier » la source de l'antenne 200 par rapport au cas de l'antenne 100. L'antenne 200 présente ainsi une épaisseur inférieure, par exemple de l'ordre de trois fois inférieure, à celle que présenterait une antenne à réseau transmetteur comparable, par exemple l'antenne 100. Cela procure en outre l'avantage, par rapport à une antenne à réseau transmetteur du type de l'antenne 100, de faciliter la réalisation des systèmes d'amplification du signal radiofréquence émis ou reçu.

Bien que cela n'ait pas été détaillé ci-dessus en relation avec les figures 2 et 3, la source 101 peut être connectée à un circuit d'amplification, par exemple intégré au circuit 109, le circuit d'amplification comprenant par exemple alors un amplificateur analogue ou identique à l'amplificateur 305, pour une utilisation de l'antenne 200 en émission, et/ou un amplificateur analogue ou identique à l'amplificateur 307, pour une utilisation de l'antenne 200 en réception. Dans un cas ou l'antenne 200 est destinée à pouvoir fonctionner alternativement en émission ou en réception, un ou plusieurs commutateurs analogues ou identiques aux commutateurs 301 et 309 peuvent alors être prévus pour activer l'un ou l'autre amplificateur du circuit d'amplification.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, la personne du métier est capable d'ajuster le rapport entre le nombre de cellules élémentaires 203 du réseau amplificateur 201 et le nombre de cellules élémentaires 107 du réseau transmetteur 105 en fonction de l'application, par exemple en fonction de l'échauffement produit par chaque cellule élémentaire 203.

Par ailleurs, bien que cela n'ait pas été détaillé ci-dessus, les cellules élémentaires 203 du réseau amplificateur 201 peuvent, en plus des fonctions d'amplification, mettre en œuvre d'autres fonctions, par exemple des fonctions de déphasage. Dans ce cas, les fonctions de déphasage utilisent par exemple des structures à varactors ou à commutateurs.

Enfin, la mise en œuvre pratique des modes de réalisation et variantes décrits est à la portée de la personne du métier à partir des indications fonctionnelles données ci-dessus. En particulier, la réalisation pratique du ou des éléments d'antenne, des commutateurs et du ou des amplificateurs des cellules élémentaires du réseau amplificateur 201 ainsi que la réalisation pratique des cellules élémentaires du réseau transmetteur 105 sont à la portée de la personne du métier à partir des indications de la présente description. La personne du métier est en outre capable d'ajuster le nombre d'éléments d'antenne 203b de chaque cellule élémentaire 203 du réseau amplificateur 201, notamment en fonction de la proportion de cellules élémentaires 203 du réseau amplificateur 201 par rapport aux cellules élémentaires 107 du réseau transmetteur 105.

Par ailleurs, les cellules élémentaires 107 du réseau transmetteur 105 peuvent être calibrées afin de corriger des erreurs de phase liées à la structure de l'antenne.

## Revendications

1. Antenne reconfigurable (200) comprenant :
- un réseau amplificateur (201) comprenant une pluralité de premières cellules élémentaires (203) ;
- un réseau transmetteur (105) comprenant une pluralité de deuxièmes cellules élémentaires (107) ; et
- au moins une source (101),
dans laquelle ladite au moins une source (101) est configurée pour irradier, ou pour être irradiée par, le réseau transmetteur (105), et le réseau amplificateur (201), disposé en regard du réseau transmetteur (105), est configuré pour irradier et pour être irradié par le réseau transmetteur (105).

2. Antenne reconfigurable (200) selon la revendication **1,** dans laquelle chaque première cellule élémentaire (203) comprend au moins un premier élément d'antenne (203b) situé en regard du réseau transmetteur (105).

3. Antenne reconfigurable (200) selon la revendication 2, dans laquelle chaque première cellule élémentaire (203) comprend en outre au moins un amplificateur (305, 307) connecté audit au moins un premier élément d'antenne (203b).

4. Antenne reconfigurable (200) selon la revendication 3, dans laquelle chaque première cellule élémentaire (203) comprend :
- un premier amplificateur (305), de préférence un amplificateur de puissance, destiné à amplifier un signal émis par l'antenne ;
- un deuxième amplificateur (307), de préférence un amplificateur faible bruit, destiné à amplifier un signal reçu par l'antenne ; et
- des commutateurs (301, 309) configurés pour activer le premier ou le deuxième amplificateur en fonction d'un signal de commande.

5. Antenne reconfigurable (200) selon l'une quelconque des revendications 1 à 4, dans laquelle chaque deuxième cellule élémentaire (107) comprend un deuxième élément d'antenne (107a) destiné à réfléchir, en direction du réseau amplificateur (201), un signal provenant de ladite au moins une source (101) et/ou à réfléchir, en direction de ladite au moins une source, un signal provenant du réseau amplificateur.

6. Antenne reconfigurable (200) selon la revendication 5, dans laquelle les deuxièmes éléments d'antenne (107a) sont situés en regard du réseau amplificateur (201) et de ladite au moins une source (101).

7. Antenne reconfigurable (200) selon la revendication 5 ou 6, dans laquelle chaque deuxième cellule élémentaire (107) comprend un troisième élément d'antenne (107b) relié au deuxième élément d'antenne (107a) par un circuit de déphasage.

8. Antenne reconfigurable (200) selon l'une quelconque des revendications 1 à 7, dans laquelle chaque première cellule (203) est adaptée à opérer une rotation de polarisation.

9. Antenne reconfigurable (200) selon l'une quelconque des revendications 1 à 8, dans laquelle ladite au moins une source (101) est une unique antenne cornet.

10. Antenne reconfigurable (200) selon l'une quelconque des revendications 1 à 9, comprenant moins de premières cellules élémentaires (203) que de deuxièmes cellules élémentaires (107), de préférence quatre fois moins de premières cellules élémentaires que de deuxièmes cellules élémentaires.

## Patentansprüche

1. Rekonfigurierbare Antenne (200), die Folgendes aufweist:
- eine Verstärkeranordnung (201) mit einer Vielzahl von ersten Elementarzellen (203);
- eine Sendeanordnung (105) aufweisend eine Vielzahl von zweiten Elementarzellen (107); und
- wenigstens eine Quelle (101),
wobei die wenigstens eine Quelle (101) konfiguriert ist zum Bestrahlen oder zum bestrahlt werden durch die Sendeanordnung (105), und wobei die Verstärkeranordnung (201), die vor der Sendeanordnung (105) angeordnet ist, konfiguriert ist zum Bestrahlen und zum bestrahlt werden durch die Sendeanordnung (105).

2. Rekonfigurierbare Antenne (200) nach Anspruch 1, wobei jede erste Elementarzelle (203) wenigstens ein erstes Antennenelement (203b) aufweist, das vor der Sendeanordnung (105) angeordnet ist.

3. Rekonfigurierbare Antenne (200) nach Anspruch 2, wobei jede erste Elementarzelle (203) ferner wenigstens einen Verstärker (305, 307) aufweist, der mit dem wenigstens einen ersten Antennenelement (203b) verbunden ist.

4. Rekonfigurierbare Antenne (200) nach Anspruch 3, wobei jede erste Elementarzelle (203) Folgendes aufweist:
- einen ersten Verstärker (305), vorzugsweise einen Leistungsverstärker, der dazu bestimmt ist, ein Signal zu verstärken, das von der Antenne gesendet wird;
- einen zweiten Verstärker (307), vorzugsweise einen rauscharmen Verstärker, der dazu bestimmt ist, ein Signal zu verstärken, das von der Antenne empfangen wird;
- Schalter (301, 309), die konfiguriert sind, um den ersten oder den zweiten Verstärker entsprechend einem Steuersignal zu aktivieren.

5. Rekonfigurierbare Antenne (200) nach einem der Ansprüche 1 bis 4, wobei jede zweite Elementarzelle (107) ein zweites Antennenelement (107a) aufweist, das gedacht ist zum Reflektieren, und zwar in Richtung der Verstärkeranordnung (201), eines Signals, das von der wenigstens einen Quelle (101) stammt, und/oder zum Reflektieren, und zwar in Richtung der wenigstens einen Quelle, eines Signals, das von der Verstärkeranordnung stammt.

6. Rekonfigurierbare Antenne (200) nach Anspruch 5, wobei die zweiten Antennenelemente (107a) vor der Verstärkeranordnung (201) und der mindestens einen Quelle (101) angeordnet sind.

7. Rekonfigurierbare Antenne (200) nach Anspruch 5 oder 6, wobei jede zweite Elementarzelle (107) ein drittes Antennenelement (107b) aufweist, das über eine Phasenschieberschaltung mit dem zweiten Antennenelement (107a) gekoppelt ist.

8. Rekonfigurierbare Antenne (200) nach einem der Ansprüche 1 bis 7, wobei jede erste Zelle (203) angepasst ist zum Durchführen einer Polarisationsdrehung.

9. Rekonfigurierbare Antenne (200) nach einem der Ansprüche 1 bis 8, wobei die wenigstens eine Quelle (101) eine einzelne Hornantenne ist.

10. Rekonfigurierbare Antenne (200) nach einem der Ansprüche 1 bis 9, aufweisend weniger erste Elementarzellen (203) als zweite Elementarzellen (107), vorzugsweise viermal weniger erste Elementarzellen als zweite Elementarzellen.

## Claims

1. Reconfigurable antenna (200) comprising:
- an amplifier array (201) comprising a plurality of first elementary cells (203);
- a transmitter array (105) comprising a plurality of second elementary cells (107); and
- at least one source (101),
wherein said at least one source (101) is configured to irradiate, or to be irradiated by, the transmitter array (105), and the amplifier array (201), located in front of the transmitter array (105), is configured to irradiate and to be irradiated by the transmitter array (105).

2. Reconfigurable antenna (200) according to claim 1, wherein each first elementary cell (203) comprises at least one first antenna element (203b) located in front of the transmitter array (105).

3. Reconfigurable antenna (200) according to claim 2, wherein each first elementary cell (203) further comprises at least one amplifier (305, 307) connected to said at least one first antenna element (203b).

4. Reconfigurable antenna (200) according to claim 3, wherein each first elementary cell (203) comprises:
- a first amplifier (305), preferably a power amplifier, intended to amplify a signal transmitted by the antenna;
- a second amplifier (307), preferably a low-noise amplifier, intended to amplify a signal received by the antenna; and
- switches (301, 309) configured to enable the first or the second amplifier according to a control signal.

5. Reconfigurable antenna (200) according to any one of claims 1 to 4, wherein each second elementary cell (107) comprises a second antenna element (107a) intended to reflect, towards the amplifier array (201), a signal originating from said at least one source (101) and/or to reflect, towards said at least one source, a signal originating from the amplifier array.

6. Reconfigurable antenna (200) according to claim 5, wherein the second antenna elements (107a) are located in front of the amplifier array (201) and of said at least one source (101).

7. Reconfigurable antenna (200) according to claim 5 or 6, wherein each second elementary cell (107) comprises a third antenna element (107b) coupled to the second antenna element (107a) by a phase-shift circuit.

8. Reconfigurable antenna (200) according to any one of claims 1 to 7, wherein each first cell (203) is adapted to performing a polarization rotation.

9. Reconfigurable antenna (200) according to any one of claims 1 to 8, wherein said at least one source (101) is a single horn antenna.

10. Reconfigurable antenna (200) according to any one of claims 1 to 9, comprising fewer first elementary cells (203) than second elementary cells (107), preferably four times fewer first elementary cells than second elementary cells.
